(19)

Europäisches
Patentamt
European
Patent Office
Office européen
des brevets

(11) **EP 4 113 813 A1**

(12) **EUROPEAN PATENT APPLICATION**

(43) Date of publication:
**04.01.2023 Bulletin 2023/01**

(21) Application number: **22182440.2**

(22) Date of filing: **30.06.2022**

(51) International Patent Classification (IPC):
**H02M 1/42** *(2007.01)*    **H02M 3/335** *(2006.01)*

(52) Cooperative Patent Classification (CPC):
**H02M 3/33573; H02M 1/0074; H02M 1/0077;
H02M 1/4258; H02M 3/33576;** H02M 1/346;
H02M 1/4216; H02M 3/33584

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 EE 202100018**

(71) Applicant: **Tallinn University of Technology
19086 Tallinn (EE)**

(72) Inventors:
• **BLINOV, Andrei**
  **19086 Tallinn (EE)**
• **CHUB, Andrii**
  **19086 Tallinn (EE)**
• **ZINCHENKO, Denys**
  **19086 Tallinn (EE)**
• **VINNIKOV, Dmitri**
  **19086 Tallinn (EE)**

(74) Representative: **Koppel, Mart Enn
Tallinn University of Technology
Ehitajate tee 5
19086 Tallin (EE)**

(54) **POWER ELECTRONIC APPARATUS FOR CONVERTING INPUT AC INTO DC**

(57)    A power electronic apparatus for converting input alternating current into direct current comprising of an input rectifying circuit that feeds series connection of two or more power electronic units and a booster circuit that includes at least one inductor, where the power electronic units perform input current shape control and provide galvanic isolation without an intermediate filtered DC signal. The input ends of two PFC DC-DC modules are connected in parallel, and output ends of these modules are connected in parallel. Possible embodiment could contain plurality of PFC DC-DC modules connected in parallel.

Fig. 1

EP 4 113 813 A1

**Description**

**Technical field**

The invention is related to power electronics, particularly power electronic apparatus and electric power conversion systems.

**Background art**

With the development of distributed energy generation system and increasing number of direct current (DC) consumers, the demand of high-power interface between medium voltage alternating current (MVAC) and low voltage direct current (LVDC) grid is rise. The conventional solution is to utilize grid frequency transformer for galvanic isolation and voltage step-down from MV level.

Document US2013/0134935 A1, 30.05.2013, Electric Power Research Institute, Inc. discloses an apparatus for DC fast charging of an electric vehicle including an active front end AC-DC converter and an isolated DC-DC converter. The active front end AC-DC converter is adapted to rectify a medium voltage alternative current (AC) to a high voltage direct current (DC) and the isolated DC-DC converter is adapted for charging the electric vehicle. The apparatus is of a single phase configuration in a modular design. Said modular design includes a number of three-level active front-end AC-DC converters with each the inputs connected in series and number of isolated DC-DC converters with each the outputs connected in parallel. Where outputs for each AC-DC converters are connected to inputs of a respective one of DC-DC converters.

Document US2018/0262117A1, Delta Electronics (Shanghai) CO., Ltd, 13.09.2018 disclosed a power electronic conversion unit and system comprising at least two AC/DC subunits, AC ports coupled in series to form a first port, two half-bridge subunits, DC ports coupled to DC ports of AC/DC subunits and transformer with two terminals of a primary winding coupled to a midpoint of bridge arm of the half-bridge subunits.

Document US 2018/0183335A1, ZTE Corporation, 28.06.2018 discloses a power conversation apparatus comprising a booster and at least two power converters, where input end of the booster is connected with one end of an AC power supply and output end is connected with one input end of first power converter, and one input end of second power converter is connected with the other end of AC power supply, wherein input ends of power converters are connected in series, and output ends are connected in parallel.

The abovementioned inventions contain at least two conversion steps. Each conversion step decreases total efficiency of the system. Also, filtering capacitor is required to be utilized between PFC stage and DC-DC stage of the system, that adds to the volume and cost.

**Disclosure of invention**

Recent advances in lithium-ion battery technology made electric vehicle (EV) price comparable with conventional cars. To satisfy the infrastructure demand of growing EV fleet extreme chargers with the power exceeding 100 kW are needed, which generally require connection to the medium voltage (MV, 1 to 33 kV). The necessity of galvanic isolation to fulfil safety requirements imposes significant influence to the system configuration. Although isolation can be achieved by using a line frequency transformer, this approach results in a large and heavy system because of the required magnetic materials. Among the current state-of-the-art solutions, the multi-cell boost (MCB) topology takes advantage from the fact that input MV level still allows using line frequency silicone rectifiers. Such configuration involves rectification circuit (RC), power factor correction (PFC) and DC-DC conversion stages and has potential in terms of performance and semiconductor costs and is proposed for charging applications. The galvanic isolation is provided by the compact high-frequency transformers of the DC-DC stages connected in parallel at the output. The current state-of-the-art configurations for MCB are generally based on three-level PFC boost rectifier stage, interfaced with a three-level neutral point clamped (3L-NPC) converter through DC-link.

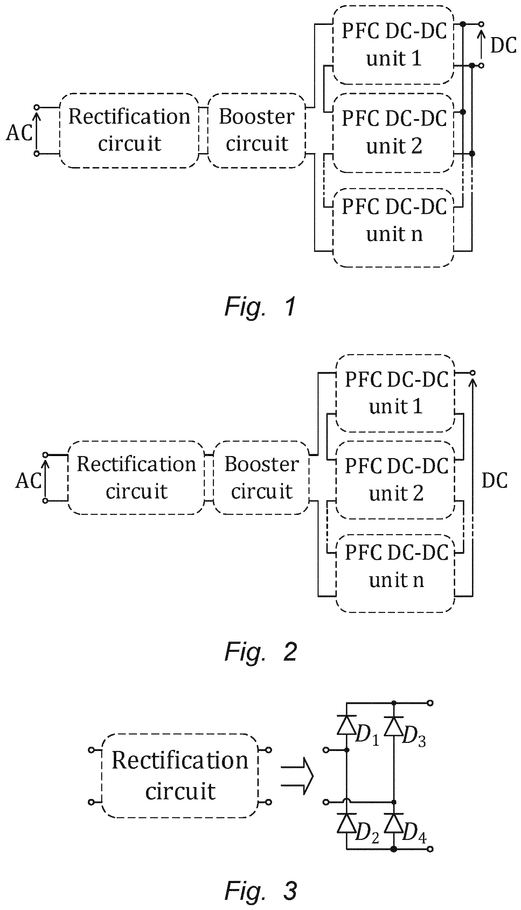

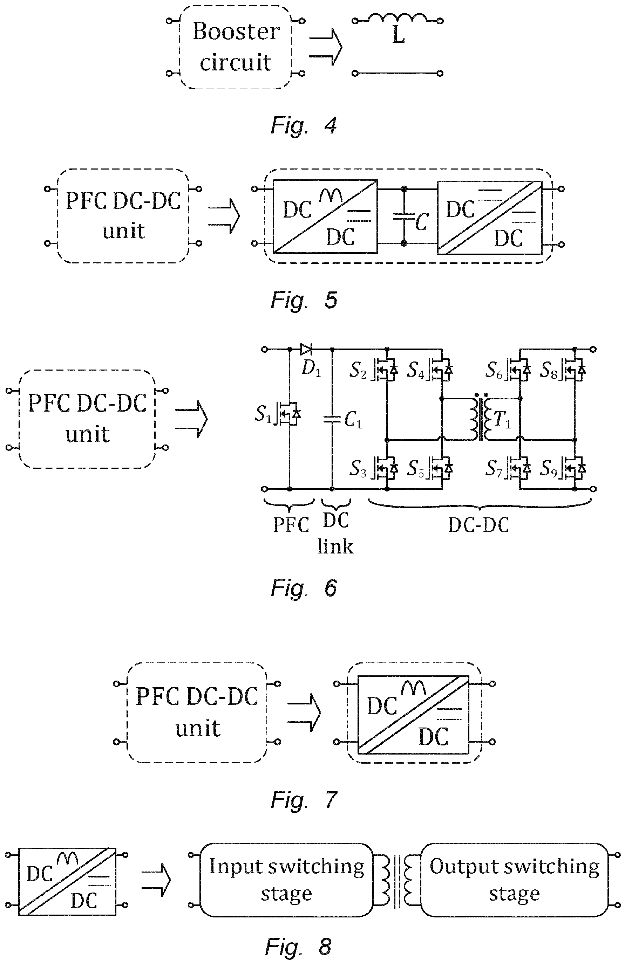

A modern solution to convert MVAC to LVDC without utilizing grid frequency transformer shown on FIG. 1 and FIG 2. The AC voltage is converting to unipolar pulsed DC voltage with a rectification circuit RC. The rectification circuit features two output ends that connected to the booster circuit BC. The rectification circuit may contain passive or active semiconductors. FIG 3 gives an embodiment of rectification circuit described in FIG 1, that contain passive semiconductors $D_1$, $D_2$, $D_3$ and $D_4$. Further, rectified alternating current flow through the booster circuit BC. Booster circuit contain at least one inductor. FIG 4 gives an embodiment of booster circuit described in FIG 1, that contain one inductor L. The booster circuit is further connected to the series-connected power factor correction PFC DC-DC units that share voltage applied to them. Output ends of the PFC DC-DC units could be connected in parallel, as shown on FIG 1, or in series, as shown on FIG 2. Two or more units may be connected in series to split the input voltage (see Fig 1 or Fig 2).

Conventional solutions for the PFC DC-DC units consist of at least two conversion steps using two subunits as shown in FIG 5. First subunit is intended to perform input current shape control and, thus, feeds second subunit with the filtered DC signal. The second subunit provides galvanic isolation and converts input DC signal to a required output DC signal. FIG 6 gives an embodiment of existing two-stage PFC DC-DC unit described in FIG 5, that contain input PFC circuit, filtering capacitor and DC-DC stage.

The present invention takes advantages of the general MCB configuration and uses series-connected modules to provide voltage sharing of the MV grid. The difference is that it provides the required PFC and galvanic isolation using a single conversion step. This allows to reduce the total number of components and benefit the overall efficiency of the power conversion. The invention does not contain an intermediate DC link, which favours reliability and lowers the cost of the charger. Moreover, the topology reconfiguration would provide additional operation flexibility and increased output voltage range.

Comparing to the existing solution the proposed invention simplifies implementation of power electronic apparatus for converting input alternating current into direct current. This was achieved through the reduction of energy conversion steps within a unit. The proposed unit structure is shown in FIG 7. The PFC DC-DC unit can provide PFC and galvanic isolation in one conversion step. The PFC DC-DC unit could utilize FET, IGBT, GAN, BJT, JTO and diodes as a semiconductor switches and semiconducror rectifiers to provide the required current consumption.

The present invention proposes a TPC system based on unfolding rectification approach for EV DC charging. The system consists of a VRU and two series-parallel connected CS DC-DC converters, connected through time-varying DC link. Since the CSCs are used for the DC-DC stage, their input inductors serve as the grid filter, making only two required for three-phase operation. As a result, the topology allows employing reduced number of passive components, while providing galvanic isolation, power factor correction, low THD and output voltage regulation. The ASMC used as a DC-DC module features constant switching frequency, soft switching in semiconductors, low current circulation and, what is especially important, requires only one independent control variable to perform the required input current shaping.

The system according to invention was experimentally validated and demonstrated inverse output voltage vs efficiency characteristic, reaching 94.8% at maximum power. There is no doubt, that for practical EV charging this trend can be more suitable since a large amount of energy is assumed to be transferred at maximal power during the constant current mode charging, when the battery voltage is relatively low. The THD of the converter was kept below 5%, which comply with the IEC 61000-2-2 standard. The system features modular design, where each DC-DC module is completely identical. Series or parallel connected modules require only two low-frequency reference signals, which allows combining several DC-DC modules to increase the output power or the output voltage of the system. Therefore, the concept is suited for charging with powers of 50 kW and above.

**Brief description of drawings**

The present invention is described below in detail with references to the drawings where in

FIG. 1 is a schematic *diagram* of a power electronic apparatus for power conversion between AC and DC side utilizing isolated PFC DC-DC units that have series connected input and parallel connected output ends.

FIG. 2 is a schematic *diagram* of a power electronic apparatus for power conversion between AC and DC side utilizing PFC DC-DC units that have series connected input and series connected output ends.

FIG. 3 is an *embodiment* of the rectification circuit, that consist of passive diode bridge. Input ends of the circuit connected to the AC side. Output ends are connected to the booster circuit.

FIG. 4 is an embodiment of the booster circuit, that consist of passive diode bridge. Input ends of the circuit connected to the AC side. Output ends are connected to the PFC DC-DC unit.

FIG. 5 is a schematic *diagram* of an existing power electronic apparatus, which contain two conversion step and has intermediate filtered DC signal between conversion steps.

FIG. 6 is an *embodiment* of an existing power electronic apparatus, which contain two conversion step and has intermediate filtered DC signal between conversion steps.

FIG. 7 is a schematic *diagram* of the proposed invention that provides PFC, galvanic isolation and does not contain intermediate filter DC signal.

FIG. 8 is a schematic *detailed diagram* of the proposed invention that provides PFC, galvanic isolation and does not contain intermediate filter DC signal. It consists of one input switching stage, two-winding isolation transformer and output switching stage.

FIG. 9 is an embodiment of the proposed invention that provides PFC, galvanic isolation and does not contain intermediate filter DC signal. It consists of one input switching stage, two-winding isolation transformer and output switching stage.

FIG. 10 is a schematic *detailed diagram* of the proposed invention that provides PFC, galvanic isolation and does not contain intermediate filter DC signal. It consists of two input switching stage, three-winding isolation transformer and output switching stage.

FIG. 11 is an embodiment of the proposed invention that provides PFC, galvanic isolation and does not contain intermediate filter DC signal. It consists of two input switching stage, three-winding isolation transformer and output switching stage.

FIG. 12 describes schematic *diagram* of possible modification of the proposed PFC DC-DC unit, where two DC-DC modules are connected in series at the input ends and in series at the output ends.

FIG. 13 describes schematic *diagram* of possible modification of the proposed PFC DC-DC unit, where two DC-DC modules are connected in series at the input ends and in parallel at the output ends.

FIG. 14 describes *detailed* schematic of two input series connected units that have parallel connected output ends.

FIG. 15 describes *detailed* schematic of two input series connected units that have series connected output ends.

FIG. 16 describes *detailed* schematic of two input parallel output parallel connected modules that forms one PFC DC-DC unit.

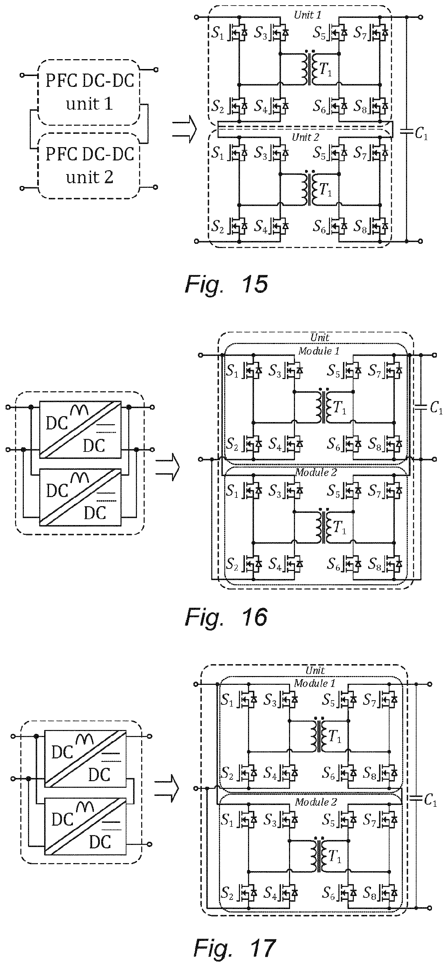

FIG. 16 describes *detailed* schematic of two input parallel output series connected modules that forms one PFC DC-DC unit.

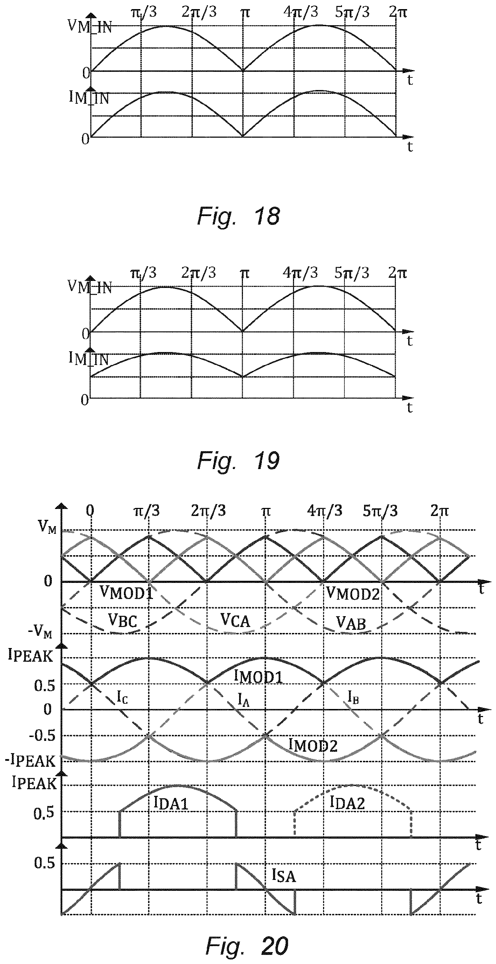

FIG. 18 describes the theoretical waveform of the DC-DC unit that provides PFC while rectification circuit depicted on FIG 3 is utilized.

FIG. 19 describes the theoretical waveform of the DC-DC unit that provides PFC while rectification circuit required nonsinusoidal current consumption to provide PFC.

FIG 20 describes a generalized waveforms of three phase Vienna rectifier-based unfolder (VRU).

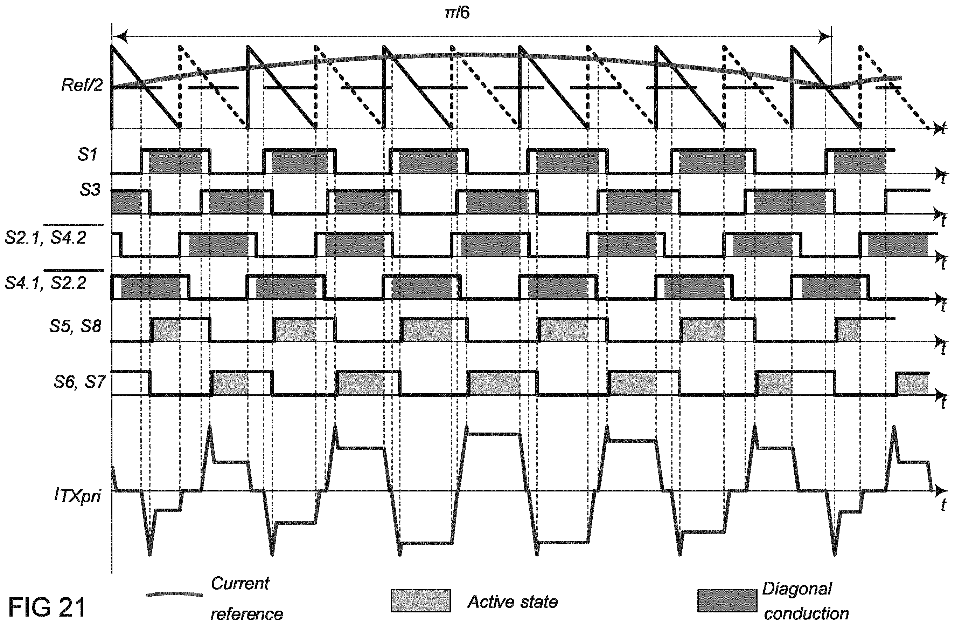

FIG 21 describes a generalized operating principle of ASMC as a DC-DC module for off-board EV charger.

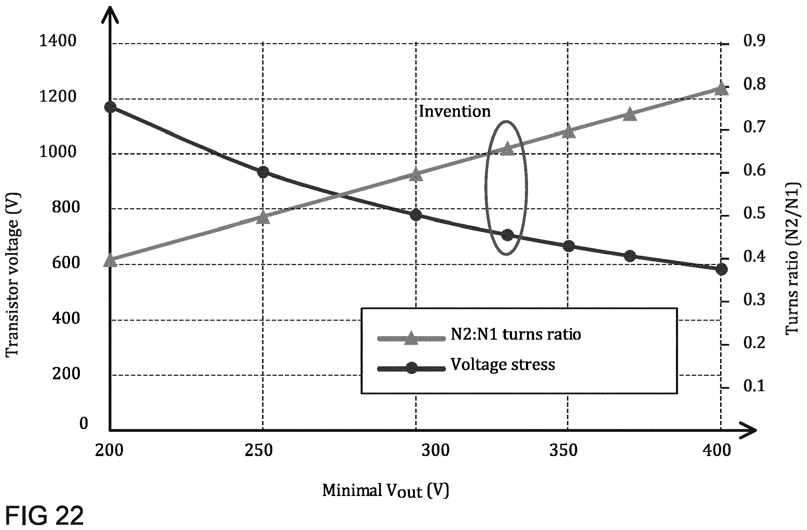

FIG 22 decribes a trade-off between minimal output voltage and steady-state voltage stress on the CS-side transistors.

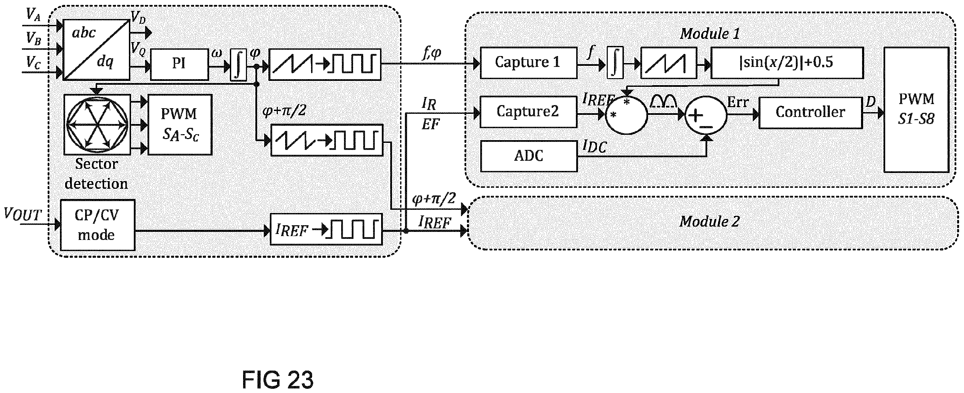

FIG 23 describes a distributed control system structure of the proposed OBC according to invention consisting of the main controller of the VRU and two ASMC sub-controllers.

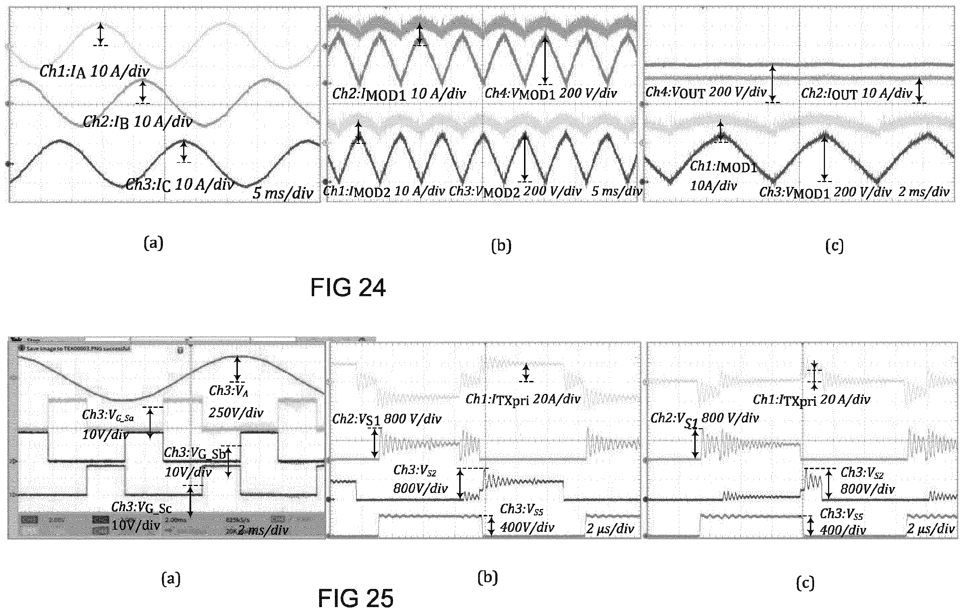

FIG 24 describes experimental waveforms of the proposed system at the output power POUT = 5kW: Sinusoidal grid currents drawn by the TPC prototype (a); Input currents and voltages of both DC-DC modules (b); Input and output current and voltage of one DC-DC module (c).

FIG 25 describes voltage of the phase A, phase A,B,C transistors gate signals of VRU (a); DC-DC module transformer TX current, voltage across switches S1,S2 and S5: at the peak DC-DC input voltage (b), at the 10% of peak DC-DC input voltage (c).

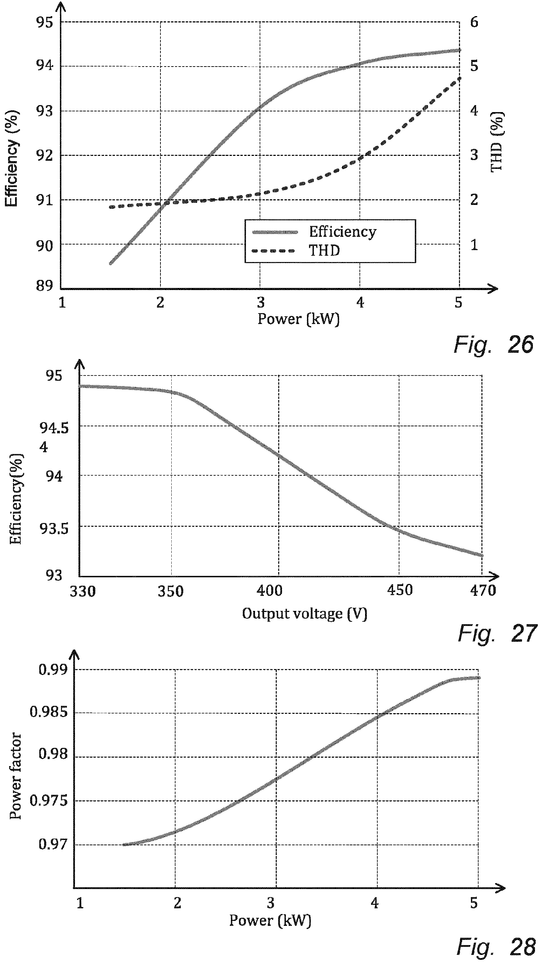

FIG 26-28 describe the system efficiency and THD vs output power at $V_{OUT}$ = 400V; vs output voltage at $P_{OUT}$ =5 kW; system power factor vs output power at $V_{OUT}$ =400V.

**Description of embodiments of the invention**

A power electronic apparatus for converting input alternating current AC into direct current DC comprises an input rectifying circuit RC that feeds series connection of two or more power electronic units and a booster circuit BC that includes at least one inductor L and a power factor correction PFC DC-DC unit. The rectifying unit two output ends are connected to the booster circuit BC, whereas the rectifying unit converts AC voltage to unipolar pulsed DC voltage. The booster circuit BC two output ends are connected to the power factor correction unit PFC.

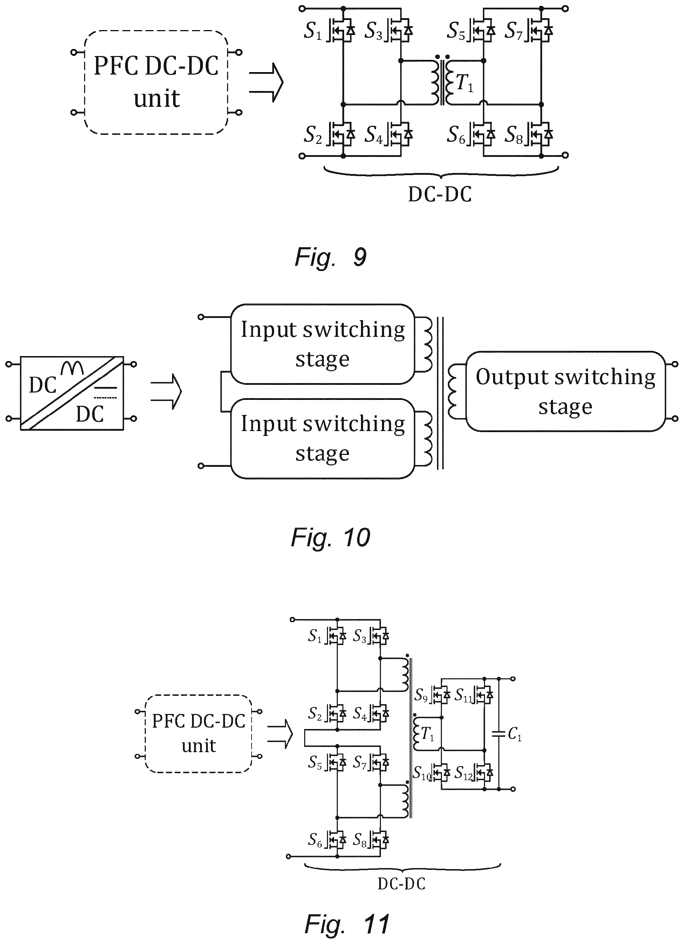

The proposed PFC DC-DC unit provides power factor correction and galvanic isolation in one conversion step. The basic PFC DC-DC unit consist of one module (see fig 7). *The module* consists of input switching stage 100 and output rectification stage/step 200, separated with isolation transformer 300, as shown on FIG.8. Possible embodiment of the proposed power factor correction PFC DC-DC unit, consisting of one module, containing one input switching stage, one output switching stage and two-winding transformer shown in FIG 9.

The input switching stage 100 comprises of two group of semiconductor switches S1, S2 and S3, S4 connected in parallel where each group of switches contains two switches connected to series, i.e. the switches S1 and S2 are connected in series and switches S3 and S4 are connected in series. The connection point of switches S1 and S2 is connected to one input of the two winding transformer 300 and the connection point of switches S3 and S4 is connected to other input end of the two winding transformer 300.The output rectification stage 200 comprises of two group of semiconductor switches S5, S6 and S7, S8 connected in parallel where each group of switches contains two switches connected to series, i.e. the switches S5 and S6 are connected in series and switches S7 and S8 are connected in series. The connection point of switches S5 and S6 is connected to one output of the two winding transformer 300 and the connection point of switches S7 and S8 is connected to other output end of the two winding transformer 300.

In another embodiment of present invention the PFC DC-DC module utilizeses the transformer that have two or more transformer windings. The PFC DC-DC module may have plurality of input stages and plurality of output stages utilizing single multi-winding transformer.

FIG 10 describes the detailed diagram of the PFC DC-DC unit according to invention, comprising of one PFC DC-DC module with two input switching stages that utilizing three-winding transformer that connected to said two input switching stages and one output switching stage.

Possible embodiment of the module containing one input, one output switching stage and two-winding transformer shown in FIG 11. Two input switching stages 110 and 120 are connected in series where one input of first input switching stage 110 is connected to one output of booster unit and one input of second input switching stage 120 is connected to other output of booster unit. The outputs of first input switching unit 110 are connected to first input winding of three-winding transformer 310 respectively and the outputs of second input switching unit 120 are connected to second input winding of three-winding transformer 310 respectively. The output rectification stage 210 is connected to output winding of three-winding transformer 310 respectively.

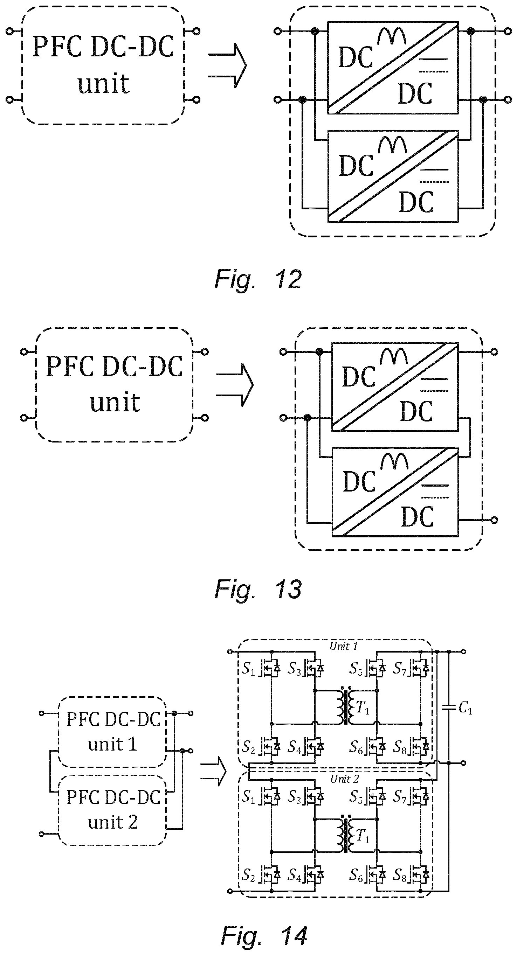

In alternative embodiment of present invention as described in FIG 12 the PFC DC-DC *unit* utilizes two *modules* that have input ends connected in parallel, and output ends connected in parallel. Thus alternative embodiment the power electronic apparatus could contain plurality of PFC DC-DC modules connected in parallel at the output ends.

In another embodiment described in FIG 13 the power electronic apparatus utilizes two *modules* that have input ends connected in parallel, and output ends connected in series whereas said embodiment contains plurality of PFC DC-DC modules connected in series at the output ends.

In the embodiment described in FIG 14 the power electronic apparatus utilizes two units that have input ends connected in series, and output ends connected in parallel. This embodiment describes the possible utilization of two full-bridge converter as PFC DC-DC units. The unit may consist of another isolated converter topology.

In the embodiment described in FIG 15 the power electronic apparatus utilizes two unist that have input ends connected in series, and output ends connected in series. This embodiment describes the possible utilization of two full-bridge converter as PFC DC-DC units. The unit may consist of another isolated converter topology.

In the embodiment described in FIG 16 the power electronic apparatus utilizes two modules united into one unit that have input ends connected in parallel and output ends connected in parallel. The possible connection aiming increase module operated power without changing the conversion approach.

In the embodiment described in FIG 17 the power electronic apparatus utilizes two modules united into one unit that have input ends connected in parallel and output ends connected in series. The possible connection aiming increase module output voltage and power without changing the conversion approach and with no increased voltage that applied on unit semiconductor switch.

In the embodiment described in FIG 18 the possible unit input current $I_{M\_IN}$ and input voltage $V_{M\_IN}$ are shown when the PFC DC-DC unit provide power factor correction feature, while rectification circuit depicted on FIG 3 and booster circuit on FIG 4 are utilized.

In the embodiment described in FIG 19 the possible unit input current $I_{M\_IN}$ and input voltage $V_{M\_IN}$ are shown when the DC-DC unit required to consume current, that differs from sinusoidal. The unit could provide current consumption when the input voltage at the output ends of rectification circuit is equal to zero.

**Example**

In the study of the system according to the present invention the system of unfolding rectification for EV three-phase charging (TPC) system (Fig. 1) comprised a three-phase Vienna rectifier-based unfolder (VRU) and two input series, output-parallel connected isolated current-source converters (CSC).

The first VRU circuit is responsible only for rectification of the grid voltages, without shaping the grid currents or controlling the DC link. Therefore, there is no need to perform switching with high frequency. Operation of the VRU (Fig. 20) is based on a simple concept - each phase A, B or C is connected to one of the three output: +, 0, - . As a result, the three AC grid voltages are rectified into two time-varying non-regulated DC links. The two CSCs, connected in series at the input, shaping the corresponding parts of the sinusoidal waveforms, while the VRU forms sinusoidal and balanced three-phase currents. Since the input inductors of the DC-DC modules are responsible for current filtering, the filter inductances at the grid side can be omitted.

The three-phase line-to-line voltages with the amplitude *VM* are applied to the input terminals of the VRU as shown in Fig. 20 are described as follows by equation 1:

$$\begin{cases} V_{AB}(\varphi) = V_M \sin(\varphi) \\ V_{BC}(\varphi) = V_M \cdot \sin(\varphi - \frac{2\pi}{3}) \\ V_{CA}(\varphi) = V_M \cdot \sin(\varphi + \frac{2\pi}{3}) \end{cases} \tag{1}$$

where $\varphi(t) = 2\pi f_{AC} t$ - is the grid voltage sine angle. The peak voltage applied to the DC-DC input terminals could be estimated by equation 2:

$$V_{MOD} = \frac{\sqrt{3}}{2} V_M \tag{2}$$

The peak input current of each phase in a three-phase application is equal to equation 3:

$$I_{PEAK} = \frac{\sqrt{2} \cdot P_{IN}}{\sqrt{3} \cdot V_M} \tag{3}$$

At any time, two out of six diodes (*DA1, DA2, DB1, DB2, DC1,* and *DC1*) are conducting in two phase legs - one in the upper arm and one in the lower arm, while in the remaining phase leg the middle transistor switch (*SA1- SA2, SB1- SB2, SC1- SC2*) is active. In consequence, in all three legs, the same current waveforms are flowing in the mentioned diodes and transistors when a single grid period is taken into consideration.

The peak diode current is equal to the peak input current. The RMS diode current is equal to equation 4:

$$I_{D(RMS)} = \frac{1}{2\pi} \sqrt{\int_{\pi/6}^{5\pi/6} (I_{PEAK} \cdot \sin(\varphi))^2 d\varphi} \approx 0.485 \cdot I_{PEAK} \tag{4}$$

According to waveforms in Fig. 20 diodes of the three-phase VRU carry the majority of the AC current, therefore the main requirement is a low voltage drop. Unfortunately, simple rectifier diodes are out of scope here as during the transitions between phases the current ripples/high-frequency oscillations between the input inductors and filter capacitors will cause a few fast transitions of the diode current. As a result, relatively fast diodes with low on-state drop are required here. When all phase currents are sinusoidal and balanced, the same values of the average and RMS currents are flowing in all diodes and bidirectional switches. The peak current in the transistors is equal to half of *IPEAK* current. The RMS current of the transistor could be calculated as follows by equation 5:

$$I_{S(RMS)} = \frac{4}{2\pi} \sqrt{\int_{0}^{\pi/6} (I_{PEAK} \cdot \sin(\varphi))^2 d\varphi} \approx 0.17 \cdot I_{PEAK} \tag{5}$$

The issue of a bidirectional switch for multilevel inverters/rectifiers is well known. In this case, two transistors are switched together two times per grid period, so the main expectation is a low on-state voltage drop. Switching performance is not a crucial factor here and low cost would be more beneficial.

Since the input current of the DC-DC converters will always contain some amount of high-frequency ripple, and an additional small capacitive filter *CF1 - CF3* was added to decrease the input ripple.

The bidirectional ASMC DC-DC converter was initially introduced for interfacing a low voltage battery with a DC bus. The converter features current source (CS) and voltage source (VS) bridges, interfaced by an isolation transformer. The exceptional property of maintaining ZVS/ZCS even at zero power with low energy circulation, absence of clamping circuits and ease of control has motivated the authors to further investigate the potential of this topology. To perform tasks required in the frame of the present study, the battery should be connected to the VS terminal, while the modulation in the CS part will be responsible for the required grid current wave-shaping.

The modulation method used to realize the operation principle shown in Fig. 21. The reference signal is compared with sawtooth carriers to synthesize the gate pulses that provide the necessary boost state duration. The CS bridge transistors operate with a duty cycle slightly higher than 0.5 to avoid an open-circuit of the input inductor.

The ASMC shares the common property of the boost converters - the voltage at the output of the CS bridge (transformer primary) should be higher than the input one.

The transformer turns ratio is determined by the lowest output voltage of the system.

$$n = \frac{V_{OUT(MIN)}}{V_{MOD(PEAK)} \cdot \eta^{\frac{1}{1-D_{MIN}}}}, \qquad (6)$$

where $\eta$ - the ASMC efficiency, $D_{MIN}$ is the minimum duty cycle of the converter, which is mainly defined by the leakage inductance of the transformer. It can be estimated by equation 7:

$$D_{MIN} = \frac{2 \cdot n \cdot I_{PEAK} \cdot L_{LK}}{V_{OUT(MIN)} \cdot T_{SW}} \qquad (7)$$

where $L_{LK}$ - the leakage inductance of the transformer *TX, TSW* - the length of one ASMC switching period. As follows, to provide ZCS of the CS-side devices, the current redistribution between the bridge switching legs should be ensured. The current redistribution time is determined by the transformer leakage inductance and adds to the minimal non-active state duration. As a result, the minimal gain and output voltage of the CS stage increases together with the increase in leakage inductance, ultimately leading to higher voltage stress across the transistors. Therefore, the transformer design with minimized leakage inductance is preferred. The lossless snubber capacitors can be applied to reduce the turn-off losses and voltage overshoot at the VS bridge. The general dependencies taking into account various design parameters of example TPC system are depicted in Fig. 22. It should be noted that in practical systems the peak voltage stresses across CS side semiconductors and transformer have higher values compared to the steady-state stress due to the presence of oscillations, typical to current-commutated circuits.

The module input current has the 75 Hz component and the RMS value could be calculated as follows by equation (8):

$$I_{CELL(RMS)} = \sqrt{\frac{1}{\pi} \int_0^\pi (I_{PEAK} \cdot (\frac{\sin(\varphi)+1}{2})^2 d\varphi} \approx 0.84 \cdot I_{PEAK} \quad (8)$$

Since the ASMC does not utilize magnetizing current for ZVS of the VS-side transistors, the transformer can be designed for the relatively large magnetizing inductance to reduce the current circulation in the primary winding. The RMS current in the transformer can be approximated by equation 9:

$$I_{CELL(RMS)} = \frac{2}{\pi} \sqrt{\int_0^{\pi/2} (I_{PEAK} \cdot (\frac{\sin(\varphi)+1}{2} \cdot (\frac{V_M \cdot \sin(2/3 \cdot \varphi)}{V_{OUT(MIN)} \cdot n} - 1))^2)} \approx \left. \begin{matrix} V_{M=5654} \\ V_{OUT(MIN)=330} \\ n=0.66 \end{matrix} \right| 0.39 \cdot I_{PEAK} \qquad (9)$$

The RMS currents of the CS-side switches could be calculated by equation 10:

$$I_{S1-S4(RMS)} = \frac{I_{MOD(RMS)}}{\sqrt{2}} \qquad (10)$$

It should be noticed that the actual RMS current in the top CS devices and transformer is higher due to the influence of circulating current. However, the difference is quite low and, in general, should not result in the higher current rating requirement of these transistors. Due to the absence of circulation current during the non-active state, the RMS currents in the VS-side transistors could be easily calculated by equation 11:

$$I_{S5-S8(RMS)} = \frac{I_{TXpri(RMS)}}{\sqrt{2} \cdot n} \qquad (11)$$

*Control Strategy of the TPC system*

The main function of the control algorithm is to provide control of the output voltage and current according to a required battery charging mode. At the same time, high power quality is expected by means of power factor close to unity and low THD of the input currents. For the TPC, these functions may be ensured by a control system presented in Fig. 23. The system is distributed, as it contains the main controller and two sub-controllers on the level of the DC-DC modules.

The main controller tracks the input three-phase voltages and extracts the grid phase angle using *abc/dq* transformation. Based on the extracted grid phase angle and frequency, the control of the VRU is provided. In addition, the grid angle is being transferred to the sub-controllers of the DC-DC modules using PWM signal with the 50% duty ratio and 37.5 Hz frequency (in the case of 50 Hz grid frequency). The rising-falling front of the PWM signal defines the 180° of the 75 Hz input voltage *VMOD.* The main controller also tracks the output DC voltage of the system and defines the required peak current. It is also being transferred to the sub-controllers with a 1 kHz PWM signal, where the 10% duty ratio equals to 0 A and 90% to 15 A of IDC peak current, respectively. The sub-controller measures the duty-cycles of the PWM signals, captures rising-falling signal fronts and creates the required current reference using formula *0.5+sin(x)/2.* Further, the module measures input current *IDC* and subtract it from the reference value. The resulting error signal *Err* processed by a regulator and the resulting boost factor D is used to create the required phase-shift between the A-SMC switches.

The proposed TPC system was experimentally verified using two DC-DC modules and rated for the output power of 5kW. The system has a modular structure, where two CSCs are connected in series with a neutral point connection from the input side and parallel at the output side. For synchronization between the VRU and each CSC module, optical fiber glass cables are used. Each DC-DC module has a completely identical hardware design and software, so each could be swapped or changed without the need for any adjustments. The DC-DC converters have no direct synchronization between each other and are using only grid angle and current references received from the VRU controller to provide the required current waveform. Several modules could be connected in parallel to increase processed power. Also, the outputs of the DC-DC converters could be connected in series to increase the output voltage, while keeping the same voltage stress on the semiconductors.

Anti-series connected IGBTs are employed as VRU bidirectional switches to reduce the total cost. For the same purpose, the ASMC transistors with moderate on-state resistance are used. The system features no high-voltage electrolytic capacitors with only a few filtering film capacitors being used. The key parameters of the experimental setup are listed in Table 1.

Table 1

| SPECIFICATION OF THE PROTOTYPE PARAMETER | SYMBOL | VALUE |
|---|---|---|
| Three-phase voltage | *VAB, VBC, VAC* | 400 VAC ±10% |
| Output voltage | *VOUT* | 330 V - 470 V |
| Output power | *POUT* | 5 kW |
| Efficiency | $\eta$ | 94.8 % |
| Voltage THD | *VTHD* | 2.6% |
| Current THD | ITHD | 4.8% |
| CS bridge duty cycle | *DA* | 0.51 |

The system is calculated to operate from the three-phase grid with a possible overvoltage up to 10 %, while providing a 330V - 470V output voltage range.

The key experimental waveforms that verify the proposed TPC concept are shown in Fig. 24. The three-phase grid currents drawn by the system at full output power (5kW) demonstrates in Fig. 24(a). The small distortions appear at the VRU switching instants due to digital delays of the control system. However, the THD is low and satisfies the IEC 61000-2-2 regulation. The input voltage and current waveforms of both CSC modules are presented in Fig. 24(b). The experimental results correspond to the theoretical waveforms and the applied input voltages of the CSCs are shifted by 180° between each other.

Fig. 24(c) demonstrates the input and output current and voltage waveforms of the CSC module at output power *POUT* = 5kW. The current decreases to 50% of the peak value while the voltage drops to zero, which verifies proposed design goals. Notably, the proposed system is able to shape the current in a wide range and mainly this ability limited by the capabilities of the regulator.

The gate signals of the VRU switches SA-SC are shown in Fig. 25(a) respectively to the input voltage of phase A. The system utilizes the proposed control strategy, and each transistor is turned on and off two times during the grid period. Thus, the resulting switching frequency of the IGBT is equal to 100 Hz. The waveforms of the DC-DC converters at the peak *VDC* voltage for the switching frequency period are shown in Fig. 25(b). The DC-DC converters operate at constant switching frequency of 75 kHz, which is one of the features of ASMC topology. As seen from the transformer current waveform, the topology features zero current across the transformer TX during the non-active state. The CS-side switches exhibit voltage oscillations, which are typical for the CS-type converters. The same waveforms at 10% of the peak *VDC* are shown in Fig. 25(c). Here the ASMC operates with high gain to provide the required input current value. The primary side switches exhibit the voltage stress defined by the reflected voltage from the secondary side, which is being almost constant during the grid frequency period.

The efficiency and THD of the proposed TPC prototype at different output power levels are shown in Fig. 26. The converter efficiency increases with power, reaching 94.4% at maximum power and 400 V output voltage. The main reason for this behavior is due to the circulating current and switching losses of the ASMC transistors, which are nearly constant throughout the power range. Potentially, the amount of circulating energy can be further reduced by applying time-varying duty cycle for the CS transistors. Still, since fast DC charger is expected to process most of the energy at full power in constant current mode, light-load efficiency is generally not of major importance. The converter THD is below 5% and improves at lower power levels. This is mainly due to the fact that the input inductors of CSCs are based on a powder core, which inductance value increases and the associated current ripple reduces at lower currents.

The dependence between the system efficiency and output voltage is shown in Fig. 27. The system demonstrates higher efficiency at the lower output voltage. This is one of the specific properties of the proposed configuration, since the gain provided by the ASMC decrease together with output voltage. In practical cases, the TPC will generally operate with higher output voltages near (and during) constant voltage mode, when the battery is almost fully charged, while most of the energy would be delivered to a battery with lower state of charge and voltage level. Finally, the power factor vs output power characteristic is shown in Fig. 28, which is close to 0.99 at maximum power.

**Claims**

1. A power electronic apparatus for converting input alternating current AC into direct current DC comprising of

   an input rectifying circuit RC that feeds series connection of two or more power electronic units and converts AC voltage to unipolar pulsed DC voltage,
   a booster circuit BC that includes at least one inductor L and a power factor correction PFC DC-DC unit, where two output ends of input rectifying circuit are connected to the booster circuit BC and two output ends of the booster circuit BC are connected to the power factor correction unit PFC
   **characterized in that**
   the power factor correction unit PFC DC-DC unit providing a power factor correction and galvanic isolation in one conversion step comprises at least one module comprising at least one input switching stage (100) and at least one output rectification stage (200), separated with isolation transformer (300) where
   the input switching stage (100) comprises of two group of semiconductor switches S1, S2 and S3, S4 connected in parallel, where the connection point of serial connected switches S1 and S2 is connected to one input of the winding of the transformer and the connection point of serial connected switches S3 and S4 is connected to other input end of the winding of the transformer (300), and
   the output rectification stage (200) comprises of two group of semiconductor switches S5, S6 and S7, S8 connected in parallel, where the connection point of serial connected switches S5 and S6 is connected to one output of the two winding transformer (300) and the connection point of serial connected switches S7 and S8 is connected to other output end of the two winding transformer 300.

2.  The power electronic apparatus according to claim 1, **characterized in that the** power factor correction unit PFC DC-DC comprises a number of the input switching stages connected in series or parallel using a transformer with three or more windings.

3.  The power electronic apparatus according to claim 1, **characterized in that** comprises groups of power factor correction units connected in series or parallel.

PFC DC-DC
unit 1

PFC DC-DC
unit 2

PFC DC-DC
unit n

AC

Rectification
circuit

Booster
circuit

DC

Fig. 1

PFC DC-DC
unit 1

PFC DC-DC
unit 2

PFC DC-DC
unit n

AC

Rectification
circuit

Booster
circuit

DC

Fig. 2

Rectification
circuit

$D_1$ $D_3$

$D_2$ $D_4$

Fig. 3

Fig. 4

Fig. 5

Fig. 6

Fig. 7

Fig. 8

*Fig. 9*

*Fig. 10*

*Fig. 11*

Fig. 12

Fig. 13

Fig. 14

Fig. 15

Fig. 16

Fig. 17

Fig. 18

Fig. 19

Fig. 20

FIG 21

Current reference

Active state

Diagonal conduction

π/6

Ref/2

S1

S3

S2.1, $\overline{S4.2}$

$\overline{S4.1}$, S2.2

S5, S8

S6, S7

ITXpri

FIG 22

FIG 23

FIG 24

FIG 25

*Fig. 26*

*Fig. 27*

*Fig. 28*

# EP 4 113 813 A1

## EUROPEAN SEARCH REPORT

Application Number

EP 22 18 2440

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 454 366 B1 (LI GUOJIE [CN] ET AL) 22 October 2019 (2019-10-22) | 1 | INV. H02M1/42 H02M3/335 |
| Y | * abstract; figure 1 * * column 5, line 11 - column 6, paragraph 17 * | 2 | |
| X | US 2020/235656 A1 (FOROUZESH MOJTABA [CA] ET AL) 23 July 2020 (2020-07-23) * abstract; figures 3C,5A * * paragraph [0032] - paragraph [0037] * | 1,2 | |
| Y | US 2020/244175 A1 (MAHDAVIKHAH-MEHRABAD SEYED-BEHZAD [CA] ET AL) 30 July 2020 (2020-07-30) * abstract; figures 1-8 * | 2 | |

TECHNICAL FIELDS SEARCHED (IPC)

H02M

The present search report has been drawn up for all claims

| Place of search | Date of completion of the search | Examiner |
|---|---|---|
| Munich | 14 November 2022 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2440

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | | Publication date | Patent family member(s) | | Publication date |
|---|---|---|---|---|---|
| US 10454366 | B1 | 22-10-2019 | CN 109361318 | A | 19-02-2019 |
| | | | US 10454366 | B1 | 22-10-2019 |
| US 2020235656 | A1 | 23-07-2020 | NONE | | |
| US 2020244175 | A1 | 30-07-2020 | TW 201924203 | A | 16-06-2019 |
| | | | US 2020244175 | A1 | 30-07-2020 |
| | | | US 2022231610 | A1 | 21-07-2022 |
| | | | WO 2019082018 | A1 | 02-05-2019 |

EPO FORM P0459

For more details about this annex : see Official Journal of the European Patent Office, No. 12/82

**EP 4 113 813 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130134935 A1
- US 20180262117 A1
- US 20180183335 A1